# EUROPÄISCHE PATENTSCHRIFT

(11) **EP 1 201 019 B1**
(45) Veröffentlichungstag und Bekanntmachung des Hinweises auf die Patenterteilung: **09.02.2005**
(21) Anmeldenummer: 01953928.7
(22) Anmeldetag: 17.07.2001
(51) Int. Cl.: H02K 3/28

(54) **ELEKTRONISCH KOMMUTIERTE ELEKTRISCHE MASCHINE, INSBESONDERE MOTOR**
ELECTRONICALLY COMMUTATED MACHINE, IN PARTICULAR A MOTOR
MACHINE ELECTRIQUE A COMMUTATION ELECTRONIQUE, EN PARTICULIER MOTEUR

(30) Priorität: 26.07.2000 DE 10036289
(43) Veröffentlichungstag der Anmeldung: 02.05.2002
(73) Patentinhaber: ROBERT BOSCH GMBH, 70442 Stuttgart (DE)
(72) Erfinder: BLASCO REMACHA, Carlos, E-2204 Huesca (ES)
(86) Internationale Anmeldenummer: PCT/DE2001/002666
(87) Internationale Veröffentlichungsnummer: WO 2002/009257

(56) Entgegenhaltungen:
- WO-A-00/48292
- DE-A- 19 725 525
- RU-C- 2 067 348
- PATENT ABSTRACTS OF JAPAN vol. 1997, no. 06, 30. Juni 1997 (1997-06-30) -& JP 09 037494 A (FANUC LTD), 7. Februar 1997 (1997-02-07)

## Beschreibung

### Stand der Technik

Die Erfindung geht aus von einer elektronisch kommutierten elektrischen Maschine, insbesondere einem Motor, nach dem Oberbegriff des Anspruchs 1.

Bei einem bekannten elektronisch kommutierten Motor, auch bürstenloser Motor genannt, dieser Art (DE 197 25 525 A1) sind die Spulen einer jeden Wicklungsphase der zweiphasig ausgeführten Statorwicklung mit ihren Spulen um jeden zweiten Zahn herumgewickelt, wobei der Wicklungsinn aufeinanderfolgender Spule sich jeweils ändert. Insgesamt sind acht Zähne bewickelt. Bei mehrphasigen Wicklungen k > 2 beträgt die Anzahl n der Zähne n = k•v wobei v ein geradzahliges Vielfaches ist. Bei einer Vierphasenwicklung, also bei einer Statorwicklung mit vier Phasen, ergeben sich bei einem Vielfachen v = 2 ebenfalls acht Zähne.

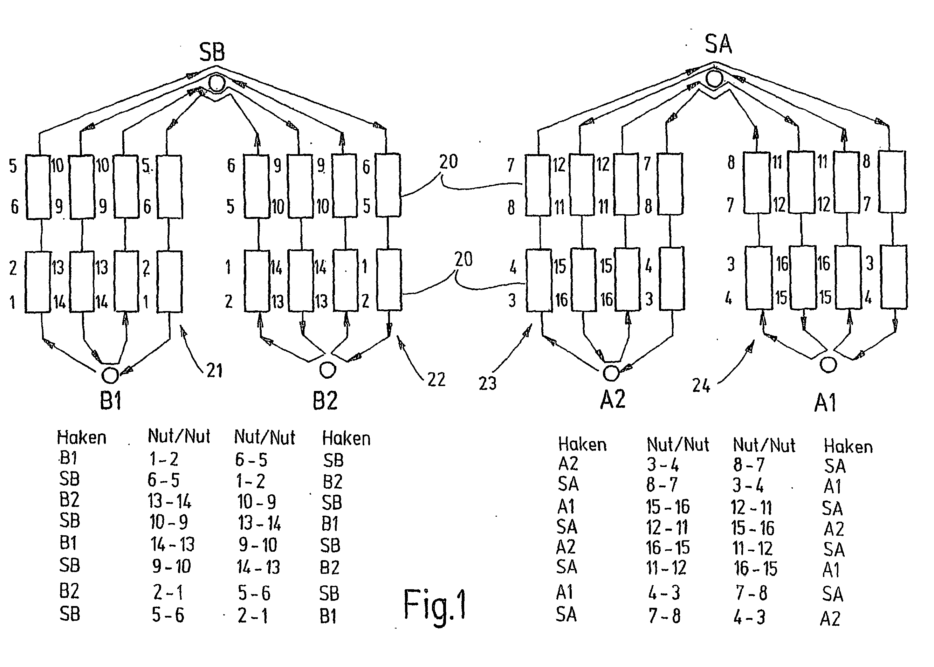

Das Wicklungsschema der Statorwicklung bei dem bekannten Motor ist in Fig. 1 in Vierphasen-Ausführung (k=4) mit vier parallelen Zweigen (1=4) und zwei reihengeschalteten Spulen pro Zweig (m=2) dargestellt. Bei den vier Wicklungsphasen 21, 22, 23, 24, die jeweils alle Spulen 20 einer Wicklungsphase umfassen, sind jeweils zwei Stränge 21, 22 einerseits und 23, 24 andererseits über die gleichen Nuten auf die gleichen Zähne gewickelt. Die Kontakthaken für die Stranganschlüsse sind mit B1, B2, A2, A1 und die Kontaktpunkte für die Sternpunkte, von denen jeweils zwei zu den Wicklungsphasen 21 und 22 bzw. 23 und 24 zugehörigen Sternpunkten zusammengefaßt sind, sind mit SB und SA bezeichnet. Alle Kontakthaken sind auf dem inneren Rand des ringförmigen Stators auf derselben Seite des Stators angeordnet. Die von den Kontakthaken zu den Spulen und von Spule zu Spule führenden Drahtabschnitte des Wickeldrahts der Wicklung sind ebenfalls am unteren Rand des Stators auf derselben Stirnseite in Umfangsrichtung entlanggeführt. In Fig. 1 stellen die Rechtecke die einzelnen, auf den Zähnen aufgewickelten Spulen 20 dar. Die neben den Rechtecken angegebenen Zahlen 1 - 16 sind die Ordnungszahlen der in Umfangsrichtung aufeinanderfolgenden Nuten zwischen den Zähnen einerseits und den Hilfszähnen andererseits. Mit "Haken" sind die Kontakthaken für die Phasenanschlüsse B1, B1, A2 und A1 sowie für die Sternpunkte SB und SA bezeichnet, die die jeweils vier parallelen Zweige der Wicklungsphasen 21 - 24 mit jeweils zwei reihengeschalteten Spulen 20 miteinander elektrisch und mechanisch verbinden. Die in den Wickeldrahtabschnitten zwischen den Spulen 20 eingezeichneten Pfeilspitzen kennzeichnen die Laufrichtung des Wickeldrahts. Die Bewicklung der Zähne ist aus der Nutfolge zu entnehmen, so wird der zwischen den Nuten 1 und 2 liegende Zahn einmal von Nut 1 nach Nut 2 mehrmals umrundet, was durch die Angabe "Nut/Nut 1 - 2" zum Ausdruck kommt.

Die in dem Wicklungsschema gemäß Fig. 1 illustrierte Wickeldrahtführung zur Herstellung der Statorwicklung ist insofern nicht optimal, als der Wickeldraht bei Einhängen in den Haken des zugehörigen Sternpunktes SA oder SB oft über lange Strecken auf der Stirnseite des Stators geführt werden muß, und sich dadurch eine hohe Zahl von Leitern in dessen Bereich ergibt.

### Vorteile der Erfindung

Die erfindungsgemäße elektronisch kommutierte oder bürstenlose elektrische Maschine, insbesondere Motor, mit den Merkmalen des Anspruchs 1 hat den Vorteil eines fertigungstechnischen einfachen und optimierten Aufbaus der Statorwicklung. Durch die erfindungsgemäße Kontaktierung von einzelnen Zweigen einer jeden Wicklungsphase an dem Sternpunkt einer anderen Wicklungsphase lassen sich die von Spule zu Spule führenden Drahtabschnitte viel besser um den Stator herum verteilen, und die Zahl der umlaufenden Drähte läßt sich minimieren. Die die Spulen verbindenden Drahtabschnitte können bezüglich ihrer Länge optimiert werden, so daß aufgrund annähernd gleicher Widerstände eine Verbesserung der Symetrie der Phasen erreicht und damit im Falle des Motors eine bessere Stromversorgung ermöglicht wird.

Durch die in den weiteren Ansprüchen aufgeführten Maßnahmen sind vorteilhafte Weiterbildungen und Verbesserungen der im Anspruch 1 angegebenen elektrischen Maschine, insbesondere des Motors, möglich.

Gemäß einer bevorzugten Ausführungsform der Erfindung ist die Statorwicklung vierphasig (k=4) mit vier parallelen Zweigen pro Wicklungsphase (1=4) ausgeführt, wobei jeweils Wicklungsphasen der Statorwicklung, deren Spulen auf den gleichen Zähne aufgewickelt sind, auf einem gemeinsamen Sternpunkt kontaktiert sind. Dabei sind jeweils zwei Zweige pro Phase zu dem gemeinsamen, der Phase zugehörigen Sternpunkt und jeweils zwei Zweige pro Phase zu dem anderen Sternpunkt geführt und an dem anderen Sternpunkt jeweils kontaktiert. Die Sternpunkte werden an beliebiger Stelle untereinander elektrisch verbunden.

### Zeichnung

Die Erfindung ist anhand eines in der Zeichnung dargestellten Ausführungsbeispiels in der nachfolgenden Beschreibung näher erläutert. Es zeigen:
- Fig. 1: ein Wicklungsschema der eingangs beschriebenen bekannten Statorwicklung für einen elektronisch kommutierten Motor,
- Fig. 2: ein gleiches Wicklungsschema der erfindungsgemäßen Statorwicklung für einen elektronisch kommutierten Motor,
- Fig. 3: eine schematisierte Darstellung einer Stirnansicht eines elektronisch kommutierten Motors mit einer ausschnittweise eingezeichneten Statorwicklung gemäß Fig. 2

### Beschreibung des Ausführungsbeispiels

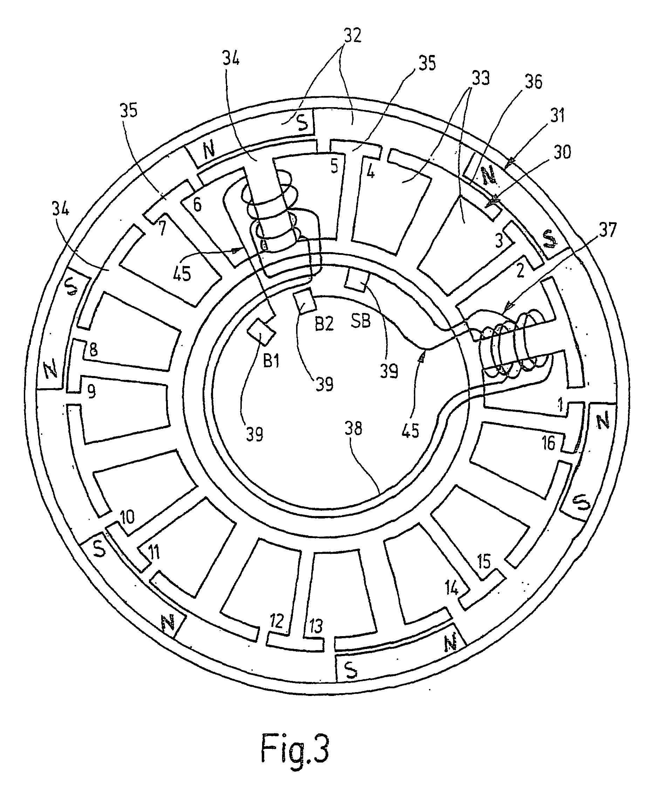

Der in Fig. 3 schematisch dargestellte elektronisch kommutierte Motor, als Ausführungsbeispiel für eine allgemeine bürstenlose elektrische Maschine, weist einen Stator 30 auf, der von einem Rotor 31 konzentrisch umschlossen ist. Der Rotor 31 trägt auf seinem Innenumfang abwechselnd Nord- und Südpole N und S, die von Permanentmagnetsegmenten 32 gebildet sind, die mit konkaven Polflächen dem Stator 30 zugekehrt sind. Der Stator 3O ist durch Nuten 33 unterteilt, die T-förmige Hauptzähne 34 und T-förmige Hilfszähne 35 abteilen. Je nach Statorkonzept können die Hilfszähne 35 auch entfallen. Die Hauptzähne 34 und die Hilfszähne 35 sind mit konvexen Polflächen dem Rotor 31 zugekehrt, wobei zwischen den Polflächen von Rotor 31 und Stator 3D ein Luftspalt 36 gebildet ist. Die luftspaltseitigen Oberflächen der Hauptzähne 34 erstrecken sich etwa über denselben Winkelbereich wie die Permanentmagnetsegmente 32, während die luftspaltseitigen Oberflächen der schmaleren Hilfszähne 35 etwa nur halb so groß sind.

Die Hauptzähne 34 tragen eine Statorwicklung 37, die durch Umwickeln der Hauptzähne 34 mit einem isolierten Wickeldraht 38 hergestellt ist, wobei der Wickeldraht 38 jeweils die beiden an einen Hauptzahn 34 angrenzenden Nuten 33 belegt und in die eine Nut 33 hineingeführt und aus der anderen Nut 33 herausgeführt ist. Die Ordnungszahlen der Nuten 33 sind in Fig. 3 mit 1 - 16 eingetragen. Die Statorwicklung 37 ist mit k Wicklungsphasen ausgeführt, die jeweils 1 parallele Zweige mit jeweils m reihengeschalteten, in den Nuten 33 einliegenden und um die Zähne 34 gewickelten Spulen aufweisen (k, 1 und m sind jeweils ganze Zahlen größer 1). Die 1 parallelen Zweige einer jeden der k Wicklungsphasen sind über Kontakthaken 39 miteinander verbunden, die Phasenanschluß und Sternpunkt einer jeden Wicklungsphase bilden.

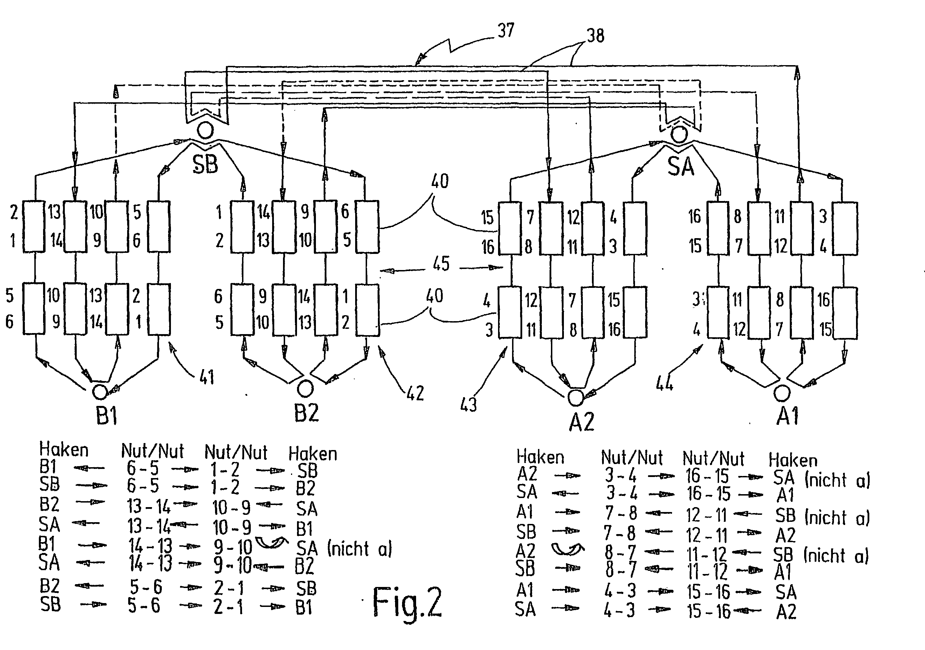

Wie das Wicklungsschema in Fig. 2 zeigt, ist in dem beschriebenen Ausführungsbeispiel die Statorwicklung 37 vierphasig ausgeführt, besitzt also vier Wicklungsphasen 41 - 44, wobei jede Phase mit vier parallelen Zweigen 45 aus jeweils zwei reihengeschalteten Spulen 40 ausgeführt ist. Die vier Zweige 45 der Wicklungsphase 41 sind auf den den Phasenanschluß B1 bildenden Kontakthaken 39 und die Zweige 45 der Wicklungsphase 42 auf den den Phasenanschluß B2 bildenden Kontakthaken 39 kontaktiert. Beiden Wicklungsphasen 41, 42 ist ein gemeinsamer Sternpunkt SB zugeordnet, der ebenfalls auf einem Kontakthaken 39 liegt. Die Zweige 45 der Wicklungsphase 43 sind auf den den Phasenanschluß A2 bildenden Kontakthaken 39 und die vier Zweige 45 der Wicklungsphase 44 auf den den Phasenanschluß A1 bildenden Kontakthaken 39 kontaktiert. Für die beiden Wicklungsphasen 43, 44 ist ein Sternpunkt SA vorgesehen, der ebenfalls von einem Kontakthaken 39 gebildet ist.

Das Wicklungsschema ist in Fig. 2 im oberen Teil als Blockschaltbild mit Spulen 40, Phasenanschlüssen B1 B2, A2 A1, Sternpunkten SB, SA und Wickeldrahtführung dargestellt. Die im Wickeldraht eingezeichneten Pfeilspitzen geben die Laufrichtung des Wickeldrahtes an. Um jeden Hauptzahn 34 (Fig. 3) ist der Wickeldraht z-mal herumgeführt und bildet jeweils eine Spule 40. Im unteren Teil der Fig. 2 ist das Wicklungsschema im Ablauf nochmals numerisch dargestellt. Die zwischen "Haken" und "Nut/Nut" eingezeichneten Pfeile geben die Richtung des umlaufenden Wickeldrahts in Zählrichtung der Nuten (aufsteigende Ordnungszahl 1 - 16 der Nuten) an, wobei die nach rechsts weisenden Pfeile die Laufrichtung des Wickeldrahts in Zählrichtung und die nach links weisenden Pfeile die Laufrichtung des Wickeldrahts gegen Zählrichtung symbolisieren.

Das Wicklungsschema ist selbsterklärend. Nur zum Einstieg sei ein Teil des Wicklungsverlaufs erläutert:
Der Wickeldraht läuft gegen Zählrichtung vom Haken B1 zur Nut 6, umschlingt dort mehrfach (z-mal) den Hauptzahn zwischen Nut 6 und 5 und wird aus der Nut 5 in Zählrichtung zur Nut 1 geführt, um dort über die Nut 2 auf den Hauptzahn mehrfach aufgewickelt zu werden. Von Nut 2 wird der Draht in Zählrichtung zum Haken B2 geführt, von dort in Zählrichtung zur Nut 6, umschlingt den Hauptzahn zwischen Nut 6 und 5 und wird aus der Nut 5 heraus in Zählrichtung zur Nut 1 geführt und dort über die Nut 2 auch mehrfach auf den Hauptzahn aufgewickelt. Der aus der Nut 2 austretende Wickeldraht ist zum Haken B2 geführt.

Dieser Teil des Wicklungsschemas ist schematisch in Fig. 3 eingezeichnet, um die räumliche Zuordnung der Statorwicklung 37 zum Stator 30 zu verdeutlichen. Wie aus Fig. 3 hervorgeht, werden die Drahtabschnitte zwischen den Nuten 5/1 und 2/6 (über SB) am unteren Rand des Stators 30 auf derselben Stirnseite des Stators 30 geführt, auf der auch die Kontakthaken 39 angeordnet sind. Wie in Fig. 3 nicht weiter dargestellt ist, werden die Drahtabschnitte in einem ringförmigen Wicklungsträger aus Kunststoff aufgenommen, der in den inneren Hohlraum des Stators 30 eingesetzt und dort am inneren Ringmantel des Stators 30, z. B. kraftschlüssig, gehalten ist.

Verfolgt man das Wicklungsschema gemäß Fig. 2 weiter, so wird ausgehend vom Haken B2 der Wickeldraht in Zählrichtung zur Nut 13 geführt, dort über die Nut 14 um den Hauptzahn mehrfach gewickelt und von Nut 14 in Zählrichtung zur Nut 10 geführt, um dort über die Nut 9 mehrfach um den Haupt zahn gewickelt zu werden. Von der Nut 9 läuft der Wickeldraht nicht - wie bisher üblich (vgl. Fig. 1) - zum Sternpurnkt SB, sondern wird gegen Zählrichtung zum anderen Sternpunkt SA geführt und von dort gegen Zählrichtung zur Nut 13. Aus Nut 13 heraus wird der Draht über die Nut 14 mehrfach um den Hauptzahn gewickelt und von Nut 14 entgegen Zählrichtung zur Nut 10 geführt, dort wieder über die Nut 9 um den Hauptzahn gewickelt und in Zählrichtung zum Haken B1 geführt. Der weitere Wicklungverlauf läßt sich nunmehr anhand des Wicklungsschemas leicht nachvollziehen. Die beiden bogenförmigen Pfeile für die Laufrichtung des Wickeldrahts bedeuten, daß der Wickeldraht einmal vollständig um den Wicklungsträger herumgeführt werden muß, um Kreuzungsstellen zu vermeiden. Der Wickeldraht wird mit α-Schlaufen in die Haken 39 eingehängt. Wo dies nicht der Fall ist, ist dies an dem jeweiligen Haken vermerkt.

Nach kompletter Bewicklung des Stators 30 befinden sich auf jedem Hauptzahn 34 insgesamt vier Spulen 40, die jeweils einem der zwei Wicklungsphasen 41, 42 und 44, zugehörig sind. Von den Wicklungsphasen 41 und 42 sind die beiden mit ihren Spulen 40 die Nuten 14/13 und 10/9 belegenden (in Fig. 2 mittleren) Zweige 45 zum Sternpunkt SA (und nicht wie die anderen zum Sternpunkt SB) geführt, und von den Wicklungsphasen 43 und 44 sind die beiden mit ihren Spulen 40 die Nuten 7/8 und 12/11 belegenden (in Fig. 2 mittleren) Zweige 45 an den Sternpunkt SB (und nicht wie die anderen an den Sternpunkt SA) geführt. Diese Spulen 40 werden dann an diesen Sternpunkten SA bzw. SB kontaktiert. Durch diese Aufteilung der Sternpunkte auf verschiedenen Wicklungsphasen 41 - 44 zugehörige Zweige 45 läßt sich die Drahtführung um den Wicklungsträger herum optimieren, etwa gleich große Drahtabschnitte realisieren und die Zahl der umlaufenden Drähte um den Wicklungsträger herum minimieren. Die Sternpunkte SA, SB werden an beliebiger Stelle miteinander verbunden.

Die Erfindung ist nicht auf die im Ausführungsbeispiel beschriebene Vierphasenwicklung beschränkt. Eine dreiphasige Ausführung ist gleichermaßen möglich, wobei auch hier die Kontaktierung von Zweigen eines oder mehrerer der drei Wicklungsphasen auf die den anderen Wicklungsphasen zugehörigen Sternpunkte eine Optimierung der Wickeldrahtführung zuläßt.

## Patentansprüche

1. Elektronisch kommutierte elektrische Maschine, insbesondere Motor, mit einem Stator (30) der durch Nuten (33) abgeteilte Hauptzähne (34) aufweist, und mit einer aus isoliertem Wickeldraht (38) hergestellten Statorwicklung (37), die k Wicklungsphasen (41- 44) mit jeweils 1 parallelen Zweigen (45) von jeweils m reihengeschalteten, in den Nuten (33) einliegenden und um die Hauptzähne (34) gewickelteten Spulen (40) sowie mit den 1 parallelen Zweigen (45) einer jeden Wicklungsphase (41 - 44) verbundene Kontakthaken (39) aufweist, die Phasenanschlüsse (B1, B2, A2, A1) und Sternpunkte (SB, SA) einer jeden Wicklungsphase (41 - 44) bilden, wobei k, 1, m ganze Zahlen gößer 1 sind, **dadurch gekennzeichnet, daß** ein Teil der einer Wicklungsphase (41 - 44) zugehörigen 1 parallelen Zweige (45) auf den Sternpunkt (SB, SA) einer anderen Wicklungsphase (44 - 41) kontaktiert ist.

2. Maschine nach Anspruch 1, **dadurch gekennzeichnet, daß** die die Phasenanschlüsse (B1 B2, A2, A1) und Sternpunkte (SB, SA) der Wicklungsphasen (41 - 44) bildenden Kontakthaken (39) am inneren Rand des ringförmigen Stators (30) auf derselben Seite des Stators (30) angeordnet und die die einzelnen Spulen (40) verbindenden Drahtabschnitte am inneren Rand des ringförmigen Stators (30) entlanggeführt sind.

3. Maschine nach Anspruch 1 oder 2, **dadurch gekennzeichnet, daß** der Wickeldraht (38) abhängig von der Lage der nachfolgenden Spule (40) im Stator (30) entweder mit α-Schlaufen in die Kontakthaken (39) eingehängt oder an den Kontakthaken (39) anliegend vorbeigeführt ist und daß alle an den Kontakthaken (39) liegenden Wickeldrahtabschnitte mit den Kontakthaken (39) elektrisch und mechanisch verbunden sind..

4. Maschine nach einem der Ansprüche 1 - 3, **dadurch gekennzeichnet, daß** bei einer vierphasigen Ausführung der Statorwicklung (37) zwei Wicklungsphasen (41, 42 bzw. 43, 44) der Statorwicklung (37), deren Spulen (40) auf die gleichen Hauptzähne (34) gewickelt sind, jeweils auf einem gemeinsamen Sternpunkt (SB, SA) kontaktiert sind und dabei bei vier parallelen Zweigen (45) pro Wicklungsphase (41 - 44) zwei Zweige pro Wicklungsphase (41- 44) zu dem gemeinsamen, der Wicklungsphase (41 - 44) zugehörigen Sternpunkt (SB, SA) und zwei Zweige pro Wicklungsphase (41 - 44) zu dem anderen Sternpunkt (SA, SB) geführt und an den Sternpunkten (SA, SB) jeweils kontaktiert sind.

5. Maschine nach einem der Ansprüche 1 - 4, **dadurch gekennzeichnet, daß** die Sternpunkte (SA, SB) extern miteinander verbunden sind.

## Claims

1. Electronically commutated electrical machine, in particular a motor, having a stator (30), which has main teeth (34) separated off by slots (33), and having a stator winding (37), which is produced from insulated winding wire (38) and has k winding phases (41 - 44) each having 1 parallel branches (45) of in each case m coils (40), which are connected in series, lie in the slots (33) and are wound around the main teeth (34), and contact hooks (39), which are connected to the 1 parallel branches (45) of each winding phase (41 - 44) and form the phase connections (B1, B2, A2, A1) and star points (SB, SA) of each winding phase (41 - 44), k, 1, m being integers greater than 1, **characterized in that** contact is made with some of the 1 parallel branches (45) associated with one winding phase (41 - 44) at the star point (SB, SA) of another winding phase (44 - 41).

2. Machine according to Claim 1, **characterized in that** the contact hooks (39), which form the phase connections (B1, B2, A2, A1) and star points (SB, SA) of the winding phases (41 - 44), are arranged on the inner edge of the annular stator (30) on the same side of the stator (30), and the wire sections connecting the individual coils (40) are passed along on the inner edge of the annular stator (30).

3. Machine according to Claim 1 or 2, **characterized in that**, depending on the position of the subsequent coil (40) in the stator (30), the winding wire (38) is either suspended with α loops in the contact hooks (39) or is guided past such that it rests against the contact hooks (39), and **in that** all of the winding wire sections lying on the contact hooks (39) are electrically and mechanically connected to the contact hooks (39).

4. Machine according to one of Claims 1 - 3, **characterized in that**, in the case of a four-phase design of the stator winding (37), contact is made in each case at a common star point (SB, SA) with two winding phases (41, 42 and 43, 44, respectively) of the stator winding (37), whose coils (40) are wound on the same main teeth (34), and, in this case, in the case of four parallel branches (45) per winding phase (41 - 44), two branches per winding phase (41 - 44) are led up to the common star point (SB, SA) associated with the winding phase (41 - 44), and two branches per winding phase (41 - 44) are led up to the other star point (SA, SB), and contact is made with each of said branches at the star points (SA, SB).

5. Machine according to one of Claims 1 - 4, **characterized in that** the star points (SA, SB) are connected to one another externally.

## Revendications

1. Machine électrique à commutation électronique, en particulier moteur, dotée d'un stator (30) qui comporte des dents principales (34) séparées par des rainures (33) et dotée d'un bobinage de stator (37) construit en fil de bobinage (38) isolé, lequel bobinage de stator comporte k phases de bobinage (41 - 44) avec 1 branches (45) respectivement parallèles de respectivement m bobines (40) montées en série, introduites dans les rainures (33) et enroulées autour des dents principales (34) ainsi qu'avec 1 branches (45) parallèles d'un crochet de contact (39) relié à chaque phase de bobinage (41 - 44), lesquels crochets de contact forment des raccordements de phase (B1, B2, A2, A1) et des points neutres (SB, SA) de chacune des phases de bobinage (41 - 44), k, 1, m étant des nombres entiers supérieurs à 1,
**caractérisée en ce qu'**
une partie des 1 branches (45) parallèles correspondant à une phase de bobinage (41 - 44) est mise en contact sur le point neutre (SB, SA) d'une autre phase de bobinage (44 - 41).

2. Machine selon la revendication 1,
**caractérisée en ce que**
les raccordements de phase (B1, B2, A2, A1) et les points neutres (SB, SA) des crochets de contact (39) formant des phases de bobinage (41 - 44) sont disposés sur le bord intérieur du stator annulaire (30) sur le même côté du stator (30), et les sections de fil reliant les différentes bobines (40) sont guidées le long du bord intérieur du stator annulaire (30).

3. Machine selon la revendication 1 ou 2,
**caractérisée en ce qu'**
en fonction de la position de la bobine (40) suivante dans le stator (30), le fil de bobinage (38) est soit accroché dans les crochets de contact (39) par des boucles α, soit amené contre les crochets de contact (39), et toutes les sections de fil de bobinage posées contre les crochets de contact (39) sont reliées électriquement et mécaniquement aux crochets de contact (39).

4. Machine selon l'une quelconque des revendications 1 à 3,
**caractérisée en ce que**
dans le cas d'une réalisation en quatre phases du bobinage du rotor (37), deux phases de bobinage (41, 42 et/ou 43, 44) du bobinage du stator (37) dont les bobines (40) sont enroulées sur les mêmes dents principales (34) sont mises en contact respectivement sur un même point neutre (SB, SA), et dans le cas de quatre branches parallèles (45) par phase de bobinage (41 - 44), deux branches par phase de bobinage (41 - 44) sont amenées au point neutre (SB, SA) commun correspondant de la phase de bobinage (41 - 44) et deux branches par phase de bobinage (41 - 44) sont amenées à l'autre point neutre (SA, SB) et mises en contact respectivement sur les points neutres (SA, SB).

5. Machine selon l'une quelconque des revendications 1 à 4,
**caractérisée en ce que**
les points neutres (SA, SB) sont reliés l'un à l'autre par voie externe.
